# EUROPÄISCHE PATENTSCHRIFT

(11) **EP 1 574 333 B1**
(45) Veröffentlichungstag und Bekanntmachung des Hinweises auf die Patenterteilung: **09.12.2009**
(21) Anmeldenummer: 05103123.5
(22) Anmeldetag: 23.10.2003
(51) Int. Cl.: B41F 13/08, B41F 13/10, B41F 13/193

(54) **Rotationskörper einer Druckmaschine**
Rotating element of a printing machine
Corps rotatif pour machine d'impression

(30) Priorität: 31.10.2002 DE 10250684
(43) Veröffentlichungstag der Anmeldung: 14.09.2005
(62) Teilanmeldung aus: 03776817.3
(73) Patentinhaber: Koenig & Bauer Aktiengesellschaft, 97080 Würzburg (DE)
(72) Erfinder: Becker, Martin, 97450 Arnstein (DE); Felgenhauer, Wolfgang, 97737 Gemünden (DE); Schäfer, Karl, 97273 Kürnach (DE); Schneider, Georg, 97080 Würzburg (DE)
(74) Vertreter: Stiel, Jürgen

(56) Entgegenhaltungen:
- CH-A- 422 831
- DD-A- 53 706
- DD-A- 66 630
- DE-A- 19 611 642
- GB-A- 2 274 623
- US-A- 5 357 863
- US-A- 5 488 903

## Beschreibung

Die Erfindung betrifft einen Rotationskörper einer Druckmaschine gemäß dem Oberbegriff des Anspruches 1.

Durch die DE 196 11 642 C2 ist eine Vorrichtung zum Befestigen einer Bespannung auf einem Druckwerkzylinder bekannt, wobei eine vorgefertigte Leiste in eine an der Mantelfläche des Zylinders ausgebildete Nut eingesetzt und an in Umfangsrichtung des Zylinders gegenüberstehenden Fügeflächen verschweißt wird, wobei die Leiste die Nut vollständig ausfüllt und in der Leiste Saugluft führende Bohrungen und eine schlitzförmige Spanngrube zum Halten von einem abgewinkelten Ende der auf dem Zylinder angeordneten Bespannung ausgebildet sind.

Durch die DD 53 706 A ist ein Druck-, Form- bzw. Gummituchzylinder für Offsetrotationsdruckmaschinen bekannt, der aus einem inneren Rohr und einem äußeren Mantel besteht, zwischen denen sich Distanzwinkel oder Stege zur Versteifung befinden, die an beide Rohre vorzugsweise durch CO₂-Kehlnahtschweißung angeschweißt sind, wobei die Distanzwinkel oder Stege mit dem inneren Rohr durch beiderseitige und mit dem äußeren Mantelrohr durch einseitige Kehlnahtschweißung verbunden sind, wobei z. B. eine Aufnahme für die Spanneinrichtung der Druckelemente, wie Druckplatte, Gummituch und Aufzug, mit dem äußeren Mantelrohr vorzugsweise mittels einer halben V-Naht bzw. mit dem inneren Rohr oder mit den dazwischen angeordneten Stegen durch beiderseitige Kehlnahtschweißung verbunden ist.

Der Erfindung liegt die Aufgabe zugrunde, einen Rotationskörper einer Druckmaschine zu schaffen.

Die Aufgabe wird erfindungsgemäß durch die Merkmale des Anspruches 1 gelöst.

Die mit der Erfindung erzielbaren Vorteile bestehen insbesondere darin, dass zur Ausbildung eines Spannkanals oder eines Strömungskanals eine Nut in die Mantelfläche des Ballens bzw. in die Oberfläche des Grundkörpers z. B. durch in der Fertigung kostengünstiges Fräsen eingebracht werden kann. Eine teure Tieflochbohrung ist nicht erforderlich. In die Nut wird ein den Spannkanal oder den Strömungskanal abdeckender und zur Mantelfläche bzw. Oberfläche begrenzender Profilkörper eingelegt und stoffschlüssig mit dem Ballen bzw. Grundkörper verbunden. Das zur Herstellung der Verbindung bevorzugte Elektronenstrahlschweißen oder Laserschweißen gestattet eine Erwärmung des Ballens bzw. Grundkörpers in einer lokal sehr eng begrenzten Schweißzone, wodurch der Ballen bzw. Grundkörper trotz der Wärmezufuhr spannungsfrei und verzugsfrei bleibt. Überdies entfällt ein Befestigen des Profilkörpers im Ballen bzw. Grundkörper durch Schrauben oder ähnliche Verbindungselemente und damit auch ein Verschließen des Kopfes dieser Verbindungselemente im Spannkanal oder Strömungskanal sowie ein Abdichten eines Durchgangsloches im Profilkörper zur Anbringung derartiger Verbindungselemente. Vorteilhaft ist auch, dass ein Ballen bzw. Grundkörper aus einem korrosiv unbeständigeren Werkstoff durch Aufschweißen einer z. B. plattenförmigen Abdeckung aus einem korrosiv beständigeren Werkstoff gegen Korrosion geschützt werden kann. In gleicher Weise kann die Mantelfläche des Ballens bzw. die Oberfläche des Grundkörpers auch verschleißfester ausgestaltet werden. Die Strömungskanäle ermöglichen durch ihre vorteilhafte Lage im Ballen bzw. Grundkörper eine effiziente Temperatursteuerung.

Ausführungsbeispiele der Erfindung sind in den Zeichnungen dargestellt und werden im Folgenden näher beschrieben.

Es zeigen jeweils in einem Teilschnitt:
- Fig. 1: einen in den Ballen des Rotationskörpers eingebrachten Profilkörper mit einem in ihm verlaufenden Spannkanal;
- Fig. 2: einen Rotationskörper mit einem in den Ballen eingeschweißten Profilkörper;
- Fig. 3: einen Rotationskörper mit einem in den Ballen eingeschweißten Profilkörper und mit einer auf dem Ballen aufgetragenen Schutzschicht;
- Fig. 4: einen Rotationskörper mit einer auf dem Grundkörper aufgebrachten Abdeckung;
- Fig. 5: einen Rotationskörper mit einer auf dem Grundkörper aufgebrachten Abdeckung und mit im Grundkörper zusätzlich zum Spannkanal ausgebildeten Strömungskanälen;
- Fig. 6: eine perspektivische Ansicht eines Rotationskörpers mit im Ballen bzw. im Grundkörper ausgebildeten Strömungskanälen und mindestens einem Spannkanal, wobei die Strömungskanäle und der Spannkanal an der Mantelfläche des Ballens bzw. an der Oberfläche des Grundkörpers jeweils von einem Profilkörper abgedeckt sind.

Wenn der Rotationskörper 01 beispielsweise als ein Formzylinder 01 oder als ein Übertragungszylinder 01 eines Druckwerks ausgestaltet ist, kann dieser Zylinder 01 in Richtung seines Umfangs U mit z. B. einem Aufzug 03 oder zwei Aufzügen 03 und axial, d. h. seiner Länge nach mit z. B. bis zu sechs Aufzügen 03 belegt sein. Bei einem Formzylinder 01 sind die Aufzüge 03 zumeist als plattenförmige Druckformen 03 ausgebildet. Bei einem Übertragungszylinder 01 handelt es sich bei den Aufzügen 03 vorzugsweise um jeweils auf einer Trägerplatte aufgebrachte Gummidrucktücher 03. Eine plattenförmige Druckform 03 bzw. eine Trägerplatte für ein Gummidrucktuch 03 besteht i. d. R. aus einem biegsamen, aber ansonsten formstabilen Material, z. B. aus einer Aluminiumlegierung.

Das Druckwerk, in dem der zuvor beschriebene Zylinder 01 zum Einsatz kommt, kann z. B. als eine 9-Zylinder-Satelliten-Druckeinheit ausgebildet sein, bei dem vier Paare jeweils bestehend aus einem Formzylinder 01 und einem Übertragungszylinder 01 um einen gemeinsamen Gegendruckzylinder angeordnet sind, wobei z. B. zumindest die Formzylinder 01 jeweils die Merkmale der hier vorgeschlagenen Lösung aufweisen können. Gerade für den Zeitungsdruck sind Anordnungen günstig, bei denen ein Formzylinder 01 in seiner axialen Richtung, d. h. nebeneinander mit bis zu sechs plattenförmigen Druckformen 03 und entlang seines Umfangs entweder mit einer plattenförmigen Druckform 03 oder hintereinander mit zwei plattenförmigen Druckformen 03 belegt ist. Ein solcher Formzylinder 01 rollt auf einem Übertragungszylinder 01 ab, der z. B. axial mit bis zu drei nebeneinander angeordneten Gummidrucktüchern 03 belegt ist, wobei jedes Gummidrucktuch 03 den vollen Umfang des Übertragungszylinders 01 umspannt. Die Gummidrucktücher 03 weisen damit die doppelte Breite und Länge der plattenförmigen Druckformen 03 auf. Der Formzylinder 01 und der Übertragungszylinder 01 haben hierbei vorzugsweise dieselben geometrischen Abmessungen bezüglich ihrer axialen Länge und ihres Umfangs. Ein als Zylinder 01 ausgebildeter Rotationskörper 01 hat z. B. einen Durchmesser von beispielsweise 140 mm bis 420 mm, vorzugsweise zwischen 280 mm und 340 mm. Die axiale Länge des Ballens 02 des Zylinders 01 liegt z. B. im Bereich zwischen 500 mm und 2400 mm, vorzugsweise zwischen 1200 mm und 1700 mm. Alternativ zur Ausgestaltung des Rotationskörpers 01 als Zylinder 01 kann dieser auch als eine vorzugsweise einen Bedruckstoff, z. B. Papier führende Walze 01 ausgebildet sein.

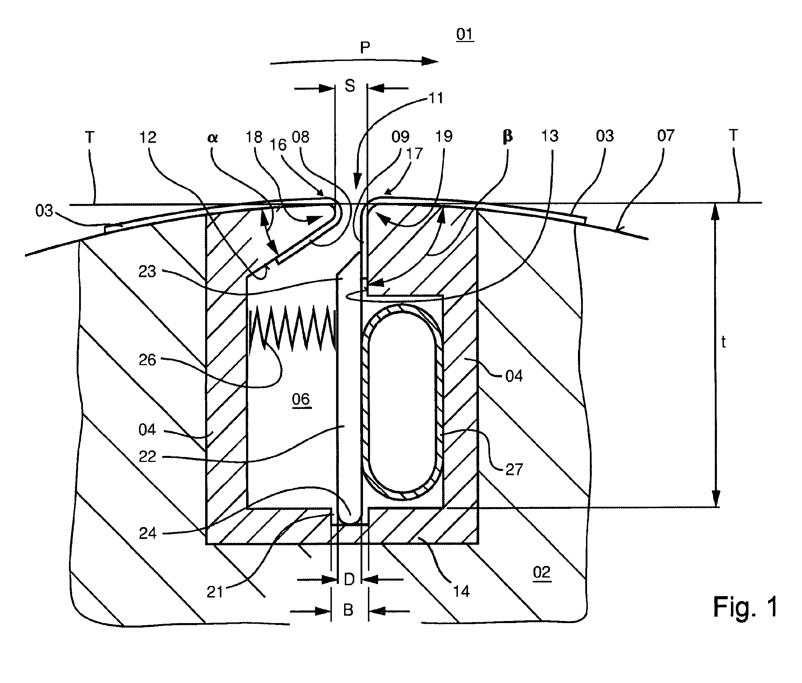

In der Fig. 1 ist ein Teilausschnitt eines Ballens 02 des Rotationskörpers 01 dargestellt, wobei in dem Ballen 02 in dessen axialer Richtung ein Spannkanal 06 verläuft. Der Spannkanal 06 ist zumindest zu einer Mantelfläche 07 des Ballens 02 von mindestens einem in den Ballen 02 eingebrachten Profilkörper 04 begrenzt. Auf der Mantelfläche 07 des Ballens 02 ist ein Aufzug 03, z. B. eine biegsame plattenförmige Druckform 03, dadurch befestigt, dass an den Enden des Aufzugs 03 abgekantete Schenkel 08; 09 in den Spannkanal 06, der eine zur Mantelfläche 07 des Ballens 02 gerichtete Öffnung 11 aufweist, eingeführt und dort im Wesentlichen an den mantelflächennahen Wandungen 12; 13 der Öffnung 11 angelegt sind. Dabei kann der Spannkanal 06 ohne einen die Erfindung hindernden Einfluß verschiedene Querschnittsgeometrien aufweisen.

Ohne die Erfindung auf die nachfolgende vereinfachte Darstellung zu beschränken, erfolgt die Beschreibung der Erfindung hier der Einfachheit halber derart, als ob auf dem Ballen 02 nur ein einziger, den Ballen 02 umschlingender Aufzug 03 zu befestigen sei. Denn für den Fachmann ist ohne weiteres verständlich, dass auf dem Ballen 02 sowohl in dessen axialer Richtung als auch in dessen Umfangsrichtung mehrere Aufzüge 03 zu befestigen sein können, wobei dann im Fall von mehreren Aufzügen 03 in der Umfangsrichtung auch mehrere Spannkanäle 06 vorzusehen sind.

In Produktionsrichtung P des Rotationskörpers 01 gesehen weist der auf dem Ballen 02 zu befestigende Aufzug 03 ein vorlaufendes Ende 16 und ein nachlaufendes Ende 17 mit jeweils einem abgekanteten Schenkel 08; 09 auf. Ebenso besitzt die Öffnung 11 des Spannkanals 06 eine in Produktionsrichtung P des Rotationskörpers 01 gesehene vordere Kante 18, von der sich eine Wandung 12 zum Spannkanal 06 hin erstreckt, sowie eine hintere Kante 19, von der sich eine Wandung 13 ebenfalls zum Spannkanal 06 hin erstreckt. Die Öffnung 11 ist an der Mantelfläche 07 des Ballens 02 lang und schmal und damit schlitzförmig ausgebildet, wobei die Schlitzweite S im Vergleich zur Tiefe t des Spannkanals 06, die z. B. 28 mm bis 35 mm, vorzugsweise 30 mm betragen kann, gering und derart bemessen ist, dass ein Schenkel 08 am vorlaufenden Ende 16 eines Aufzugs 03 und ein Schenkel 09 am nachlaufenden Ende 17 desselben oder - bei mehreren in Umfangsrichtung des Rotationskörpers 01 befestigten Aufzügen 03 - eines gleichartigen Aufzugs 03 in der Öffnung 11 hintereinander anordenbar sind. Vorteilhaft sind Schlitzweiten S von weniger als 5 mm, vorzugsweise im Bereich von 1 mm bis 3 mm. Das Verhältnis von der Tiefe t des Spannkanals 06 zur Schlitzweite S liegt damit vorzugsweise etwa bei 10:1 bis 15:1. Die Öffnung 11 kann sich ganz oder nur teilweise über die Länge des Ballens 02 erstrecken.

Zwischen der sich von der vorderen Kante 18 zum Spannkanal 06 hin erstreckenden Wandung 12 und einer gedachten, auf der Mantelfläche 07 des Rotationskörpers 01 auf der Öffnung 11 aufliegenden Tangente T ist ein spitzer Öffnungswinkel α ausgebildet, der zwischen 30° und 60°, vorzugsweise 45° beträgt. Somit verjüngt sich die Schlitzweite der Öffnung 11 zur Mantelfläche 07 des Rotationskörpers 01 hin und sie vergrößert sich zum Spannkanal 06 hin. Der Schenkel 08 am vorlaufenden Ende 16 des Aufzugs 03 ist an der vorderen Kante 18 der Öffnung 11 einhängbar, sodass dieser Schenkel 08 an der sich von der vorderen Kante 18 zum Spannkanal 06 erstreckenden Wandung 12 vorzugsweise formschlüssig anliegt. In dem in der Fig. 1 gezeigten Beispiel fällt die Wandung 13 an der hinteren Kante 19 der Öffnung 11 in etwa senkrecht zum Spannkanal 06 hin ab. Die Wandung 13 kann jedoch auch leicht geneigt sein, sodass sich die Öffnung 11 zum Spannkanal 06 hin weitet. Ein Winkel β, der sich als Öffnungswinkel zwischen der sich von der hinteren Kante 19 zum Spannkanal 06 erstreckenden Wandung 13 und der bereits erwähnten, auf der Mantelfläche 07 des Rotationskörpers 01 auf der Öffnung 11 aufliegenden Tangente T ergibt, liegt z. B. im Bereich zwischen 85° und 95° und beträgt vorzugsweise 90°.

Der Spannkanal 06 erstreckt sich im Regelfall in axialer Richtung des Rotationskörpers 01. Vorzugsweise in etwa diametral gegenüber der schlitzförmigen Öffnung 11 befindet sich eine z. B. in den Boden 14 des Spannkanals 06 oder des Profilkörpers 04 eingelassene, zum Spannkanal 06 offene Nut 21, in der ein biegesteifes, vorzugsweise plattenförmiges Haltemittel 22 - vorzugsweise lose - eingestellt und schwenkbar gelagert ist. Das Haltemittel 22 kann z. B. eine metallische, sich längs im Spannkanal 06 erstreckende Leiste 22 sein. Die Nut 21 ist demnach Lagerpunkt und Abstützpunkt des als ein Hebel 22 ausgestalteten Haltemittels 22. Um das Haltemittel 22 in der Nut 21 schwenken zu können, ist die Breite B der Nut 21 größer ausgebildet als die Dicke D des Haltemittels 22. Das Haltemittel 22 ist derart ausgebildet, dass es ein erstes oberes, an einer der beiden Wandungen 12 oder 13 der Öffnung 11 anlegbares Ende 23 und ein der Öffnung 11 gegenüberliegendes zweites unteres Ende 24 aufweist, wobei sich dieses untere Ende 24 in der Nut 21 abstützt.

Eine vorzugsweise vorgespannte Feder 26 stützt sich mit ihrem einen Ende am Profilkörper 04 und mit ihrem anderen Ende am Haltemittel 22 ab, vorzugsweise nahe am ersten oberen Ende 23 des Haltemittels 22, damit das als ein Hebel 22 wirkende Haltemittel 22 von seinem Lagerpunkt in der Nut 21 bis zur Feder 26 einen möglichst langen Hebelarm ausbildet. Ein Stellmittel 27 wirkt dem von der Feder 26 über das Haltemittel 22 auf die Wandung 13, die sich von der hinteren Kante 19 der Öffnung 11 erstreckt, ausgeübten Anpreßdruck entgegen, um bei einer Betätigung des Stellmittels 27 eine mit dem Haltemittel 22 an der Wandung 13 bewirkte Klemmung bei Bedarf zu lösen. Bei dem Stellmittel 27 handelt es sich vorzugsweise um einen in Längsrichtung des Spannkanals 06 verlaufenden Schlauch 27, der mit einem Druckmittel, z. B. Druckluft beaufschlagbar ist. Demnach sind im Spannkanal 06 alle Bauteile angeordnet und gelagert, die zum Haltern eines Aufzugs 03 auf der Mantelfläche 07 des Ballens 02 benötigt werden.

Die hier gegebenen Erläuterungen zur Gestaltung und zum Einsatz des vorgeschlagenen Rotationskörpers 01 sollen in entsprechender Weise für alle nachstehend beschriebenen Ausführungsformen gelten.

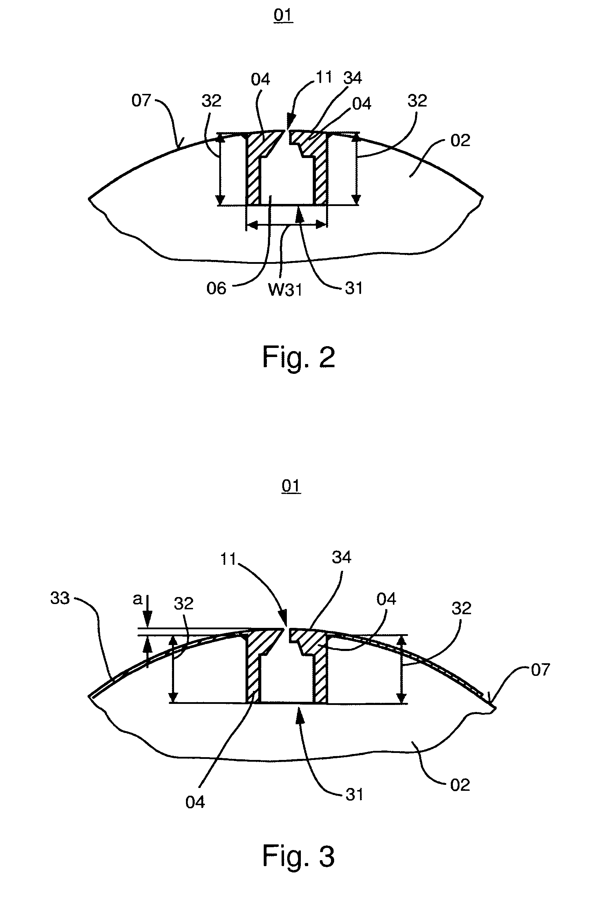

Bei einer ersten in der Fig. 2 dargestellten Ausführungsform wird zur Herstellung des Rotationskörpers 01 in dessen Ballen 02 zumindest ein Profilkörper 04 derart eingebracht, dass der Profilkörper 04 einen Spannkanal 06 zumindest an der Mantelfläche 07 räumlich begrenzt. Die Einbringung des Profilkörpers 04 in den Ballen 02 erfolgt stoffschlüssig durch ein Schweißverfahren, z. B. durch Elektronenstrahlschweißen oder durch Laserschweißen. Zur Einbringung des Profilkörpers 04 in den Rotationskörper 01 wird unabhängig von der nachfolgend angewendeten Verbindungstechnik der Profilkörper 04 vorteilhafterweise in eine in die Mantelfläche 07 des Ballens 02 vorzugsweise eingefräste Nut 31 eingesetzt. Sofern der Profilkörper 04 blockförmig ausgebildet ist, sind die Weite W31 der Nut 31 und die Breite des Profilkörpers 04 vorzugsweise in einer Spielpassung oder einer Übergangspassung gut fügbar zueinander angepaßt. Der Profilkörper 04, der sich in axialer Richtung des Rotationskörpers 01 erstreckt, hat vorzugsweise eine leistenförmige Gestalt und kann einteilig oder mehrteilig ausgebildet sein. Wie in den Fig. 2 und 3 veranschaulicht, ist es z. B. nicht zwingend erforderlich, dass der Profilkörper 04 im Spannkanal 06 einen Boden ausbildet. Als Alternative zu einem Profilkörper 04 als Formteil kann der Profilkörper 04 in einem Aufschweißverfahren zumindest an oder nahe der Mantelfläche 07 des Ballens 02 durch Auftragen eines Werkstoffs angeformt werden. Als Werkstoff für einen schweißtechnisch ausgebildeten Profilkörper 04 eignet sich insbesondere ein korrosionsbeständiger Edelstahl. Das im Spannkanal 06 angeordnete Haltemittel 22, die Feder 26 und das Stellmittel 27 sind in der Fig. 2 und den nachfolgenden Figuren der Übersichtlichkeit halber nicht mehr dargestellt. Für Details wird diesbezüglich auf die Fig. 1 verwiesen. Die Weite W31 der Nut 31 kann zumindest an der Mantelfläche 07 z. B. zwischen 10 mm und 50 mm, vorzugsweise zwischen 12 mm und 30 mm betragen.

Der Profilkörper 04 weist an einer der Mantelfläche 07 zugewandten Seite, d. h. an seiner Stirnseite 34 z. B. eine schlitzförmige Öffnung 11 als Zugang zum Spannkanal 06 auf. Alternativ können zwei Profilkörper 04 vorgesehen sein, die zumindest an der Mantelfläche 07 durch ihre Beabstandung in axialer Richtung des Rotationskörpers 01 eine schlitzförmige Öffnung 11 ausbilden. Der Querschnitt des Spannkanals 06 kann vorzugsweise rund oder rechteckig ausgebildet sein. Der Spannkanal 06 verläuft vorzugsweise in axialer Richtung des Rotationskörpers 01. Der Profilkörper 04 kann leistenförmig und in einem Schnitt quer zur axialen Richtung des Rotationskörpers 01 im Wesentlichen eckig ausgebildet sein.

An den seitlichen Fügeflächen zwischen dem in die Nut 31 eingefügten Profilkörper 04 und dem Ballen 02 befinden sich Schweißzonen 32, die in Richtung des Umfangs des Ballens 02 nur eine sehr geringe Breite aufweisen, die dafür aber z. B. über einen großen Teil der Bautiefe des Profilkörpers 04 in den Ballen 02 hineinragen. Die vorgeschlagenen Schweißverfahren ermöglichen durch eine Bündelung der Strahlung, die ihre jeweilige Energiequelle aussendet, eine lokal eng begrenzte Erwärmung des Ballens 02 mit einer großen Tiefenwirkung. So beträgt beim Elektronenstrahlschweißen die Breite jeder Schweißzone 32 bei einer in den Ballen 02 gerichteten Schweißtiefe von 5 mm z. B. 1 mm, bei einer Tiefe von 20 mm z. B. 2 mm und bei einer Tiefe von 40 mm z. B. 3 mm. Beim Laserschweißen sind die Schweißzonen 32 etwas breiter ausgebildet, sodass die Breite und Tiefe jeder Schweißzone 32 in einem Verhältnis von etwa 1:5 stehen. Für die hier vorliegende Anwendung können Schweißtiefen von 15 mm bis 20 mm ausreichend sein. Die maximal benötigte Tiefe liegt z. B. bei 50 mm.

Für die Schweißung ist es vorteilhaft, zumindest einen der Mantelfläche 07 nahen Teil der Fügefläche zwischen dem Ballen 02 und des in der Nut 31 angeordneten Profilkörpers 04 glattwandig und in einem Schnitt quer zur axialen Richtung des Rotationskörpers 01 ungekrümmt auszubilden. Die Schweißzonen 32 können z. B. in etwa lotrecht zur Mantelfläche 07 des Ballens 02 verlaufen und damit in etwa radial zum Rotationskörper 01 angeordnet sein oder sie weisen zur Mantelfläche 07 des Ballens 02 einen bewußt gewählten und im Wesentlichen von der Geometrie des Profilkörpers 04 abhängigen Neigungswinkel auf. In jedem Fall dringen die Schweißzonen 32 entsprechend dem Strahlenverlauf der Energiequelle geradlinig in den Ballen 02 ein. Die Schweißzonen 32 müssen sich nicht notwendigerweise über die gesamte Länge des Ballens 02 erstrecken, sondern können z. B. nur punktuell oder in mehreren voneinander beabstandeten kurzen Abschnitten von nur wenigen Millimetern Länge ausgebildet sein. Die geschweißten Abschnitte können z. B. 5 mm bis 25 mm, vorzugsweise etwa 10 mm lang sein und sich in Abständen von 20 mm bis 50 mm, vorzugsweise in 30 mm bis 40 mm in axialer Richtung des Rotationskörpers 01 wiederholen.

Der Profilkörper 04 und der Ballen 02 können durchaus aus unterschiedlichen Werkstoffen bestehen. So wird für den Profilkörper 04 vorzugsweise ein korrosionsbeständiger Werkstoff gewählt, z. B. ein legierter, korrosionsfester Stahl oder eine Aluminiumbronze, wohingegen der Ballen 02 z. B. aus einem unlegierten C22-Stahl und damit aus einem für Korrosion anfälligeren Werkstoff bestehen kann. Insbesondere eine Ausgestaltung des Rotationskörpers 01 mit Werkstoffen unterschiedlichen Korrosionsverhaltens führt zu einer zweiten nicht erfindungsgemäßen Ausführungsform, bei der es vorteilhaft sein kann, den mindestens einen Profilkörper 04 mit einem geringfügigen Überstand a in die Nut 31 einzusetzen oder mit einem geringfügigen Überstand a an der Nut 31 anzuformen, wobei sich der Überstand a in wenigen zehntel Millimeter bemißt, sodass der in die Nut 31 eingesetzte Profilkörper 04 die Mantelfläche 07 des Ballens 02 um den Überstand a geringfügig überragt (Fig. 3). Auf der Mantelfläche 07 des Ballens 02, der z. B. aus einem preiswerten unlegierten C22-Stahl bestehen kann, wird vorteilhafterweise eine korrosionsfeste Schutzschicht 33 aufgetragen, wobei die Schutzschicht 33 z. B. eine in einem Hochgeschwindigkeitsflammspritzverfahren auftragbare Beschichtung auf einer Basis von Nickel oder Eisen-Austenit-Cobalt oder eine in einem Flammspritzverfahren auftragbare Beschichtung aus Titanoxid sein kann. Diese Schutzschicht 33 kann auch ganz oder teilweise die zur Mantelfläche 07 des Ballens 02 gerichtete Stirnfläche 34 des Profilkörpers 04 überdecken. Nach dem Aufbringen der Schutzschicht 33 wird die gesamte beschichtete Mantelfläche 07 des Ballens 02 vorzugsweise überdreht oder geschliffen, wodurch die Stirnfläche 34 des Profilkörpers 04 ganz oder teilweise von der Schutzschicht 33 wieder freigelegt wird und ein kontinuierlicher, glatter Übergang vom Profilkörper 04 zur Mantelfläche 07 des Ballens 02 sichergestellt wird. Bei dieser Ausgestaltung des Rotationskörpers 01 tritt ein auf dem Ballen 02 aufgebrachter Aufzug 03 nur mit korrosionsfesten Flächen in Kontakt, weil sowohl die Mantelfläche 07 des Ballens 02 als auch der Profilkörper 04 jeweils zumindest an den Kontaktflächen mit dem Aufzug 03 korrosionsfest ausgebildet sind.

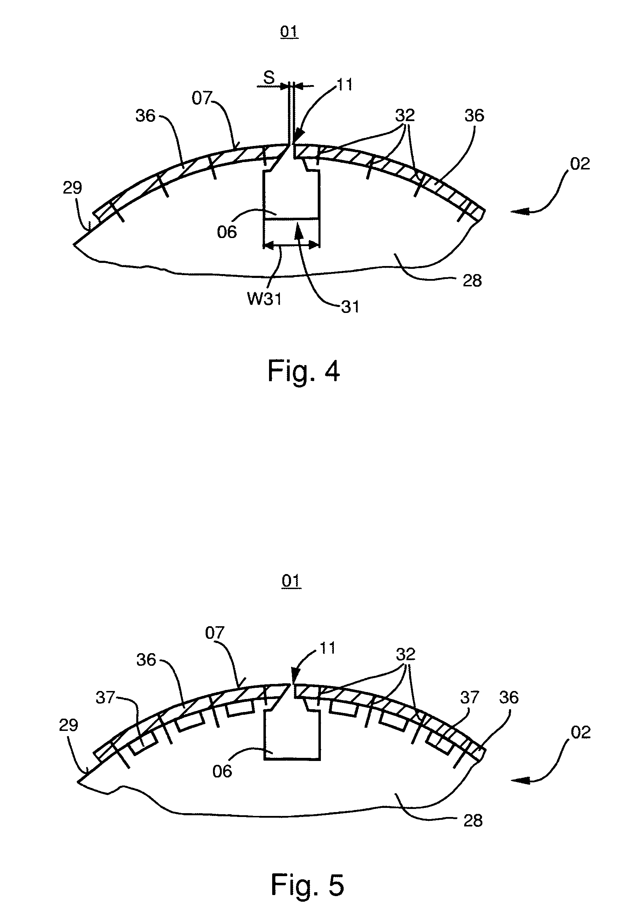

In der Fig. 4 ist eine dritte Ausführungsform des Rotationskörpers 01 aufgezeigt, bei der auf einer Oberfläche 29 eines Grundkörpers 28 des Ballens 02 eine Abdeckung 36 aufgebracht ist. Der Grundkörper 28 kann samt seiner Oberfläche 29 aus einem für Korrosion anfälligeren, preiswerten Werkstoff, z. B. aus einem unlegierten C22-Stahl bestehen. Die Abdeckung 36 besteht hingegen vorzugsweise aus einem korrosionsbeständigen Werkstoff, z. B. einem legierten, korrosionsfesten Stahl und wird stoffschlüssig auf der Oberfläche 29 des Grundkörpers 28 aufgebracht, vorzugsweise angeschweißt, insbesondere durch Elektronenstrahlschweißen oder durch Laserschweißen. Diese bevorzugten Schweißverfahren gestatten es aufgrund ihrer Tiefenwirkung, dass durch die Abdeckung 36, deren radiale Materialstärke, d. h. Dicke nur wenige Millimeter beträgt, vorzugsweise höchstens 10 mm, hindurchgeschweißt und so eine sichere und damit dauerhafte feste Verbindung der Abdeckung 36 mit der Oberfläche 29 des Grundkörpers 28 hergestellt werden kann. In den Grundkörper 28 hineinreichende Schweißzonen 32, die in den Fig. 4 bis 6 vereinfacht durch Linien dargestellt sind, sind entlang des Umfangs des Ballens 02 bzw. dessen Grundkörpers 28 vorzugsweise äquidistant ausgebildet.

Der Spannkanal 06, der vorzugsweise in Richtung der Länge des Ballens 02 verläuft, kann - wie in der Fig. 4 dargestellt - entweder unmittelbar in den Grundkörper 28 eingebracht sein oder in der zuvor in Verbindung mit der Fig. 2 beschriebenen Weise in Verbindung mit einem Profilkörper 04 ausgebildet sein, wobei der Profilkörper 04 stoffschlüssig durch Anwendung eines Schweißverfahrens, insbesondere durch Elektronenstrahlschweißen oder durch Laserschweißen mit dem Grundkörper 28 unlösbar verbunden ist. Ungeachtet der Einbringung des Spannkanals 06 in den Grundkörper 28 weist die Abdeckung 36 an allen funktional erforderlichen Stellen eine schlitzförmige Öffnung 11 zum Spannkanal 06 auf, wobei diese Öffnung 11 in die Abdeckung 36 eingebracht, vorzugsweise eingefräst wird, und zwar vorzugsweise nachdem die Abdeckung 36 auf der Oberfläche 29 des Grundkörpers 28 aufgebracht worden ist. Die schlitzförmige Öffnung 11 wird mithin zumindest als Teil einer Halteeinrichtung in die Abdeckung 36 eingebracht, wobei mit der Halteeinrichtung ein auf der Oberfläche 29 aufbringbarer Aufzug 03 gehaltert werden kann. Ein Beispiel für eine Halteeinrichtung zeigt die Fig. 1, weshalb für Einzelheiten zur Halteeinrichtung auf die diesbezügliche Beschreibung verwiesen wird. Nachdem die Öffnung 11 in die Abdeckung 36 eingebracht worden ist, kann z. B. im Grundkörper 28 der Spannkanal 06 ausgebildet werden, sofern die Öffnung 11 nicht einen Zugang zu einem im Grundkörper 28 bereits vorhandenen Spannkanal 06 herstellt. Die Schlitzweite S der Öffnung 11 liegt im Bereich weniger Millimeter, vorzugsweise beträgt sie höchstens 5 mm, insbesondere 1 mm bis 3 mm (Fig. 1). Die Öffnung 11 kann sich über die gesamte Länge des Ballens 02 oder nur in Abschnitten dieser Länge erstrecken.

Wenn der Spannkanal 06 in der zuvor in Verbindung mit der Fig. 2 beschriebenen Weise im Grundkörper 28 ausgebildet ist, zeigen die Fig. 4 und 5 eine besondere Ausgestaltung der in den Grundkörper 28 eingebrachten Nut 31, in welche ein Profilkörper 04 eingebracht ist. Die in den Fig. 4 und 5 gezeigte Nut 31 weist im Grundkörper 28 eine Unterschneidung auf. Eine derartige Form der Nut 31 kann z. B. mit einem T-förmigen Fräser in den Grundkörper 28 eingebracht werden. Der Vorteil der Unterschneidung besteht darin, dass ein z. B. in axialer Richtung des Rotationskörpers 01 in den Grundkörper 28 eingeschobener Profilkörper 04 durch die Unterschneidung in radialer Richtung des Rotationskörpers 01 gegen ein unbeabsichtigtes Lösen aus der Nut 31 gesichert ist.

Überdies ist der Fig. 4 entnehmbar, dass die den Ballen 02 an seiner Mantelfläche 07 abschließende Abdeckung 36 eine Öffnung 11 mit einer im Vergleich zur Weite W31 der Nut 31 geringeren Schlitzweite S aufweist. Das Verhältnis von der Weite W31 der Nut 31 zur Schlitzweite S der Öffnung 11 liegt vorzugsweise zwischen 5:1 und 15:1. Die schlitzförmige Öffnung 11 kann, wie bereits erwähnt, in die Abdeckung 36 eingebracht werden, nachdem die Abdeckung 36 auf der Oberfläche 29 des Grundkörpers 28 aufgebracht worden ist. An dieser Öffnung 11 werden z. B. durch Fräsen die in Verbindung mit der Fig. 1 beschriebene vordere Kante 18 mit der sich von dieser Kante 18 unter dem Winkel α zum Spannkanal 06 erstreckenden Wandung 12 sowie die hintere Kante 19 mit der sich in etwa senkrecht zum Spannkanal 06 hin erstreckenden Wandung 13 an der Öffnung 11 ausgebildet bzw. angeformt. Für weitere Einzelheiten zur Ausgestaltung dieser Öffnung 11 wird auf die Beschreibung zur Fig. 1 verwiesen.

Des Weiteren kann als eine vierte Ausführungsform -wie aus der Fig. 5 ersichtlich - in den Grundkörper 28 ein in Richtung der Mantelfläche 07 des Ballens 02 offener Strömungskanal 37, insbesondere ein Kühlkanal 37 eingebracht sein, der dann von der auf der Oberfläche 29 des Grundkörpers 28 aufgebrachten Abdeckung 36 abgedeckt wird. Vorteilhafterweise sind im Grundkörper 28 entlang seines Umfangs mehrere Strömungskanäle 37 vorgesehen, die vorzugsweise äquidistant voneinander beabstandet sind und die z. B. einen rechteckförmigen Querschnitt aufweisen. Derart gestaltete Strömungskanäle 37 können vorzugsweise in den Grundkörper 28 eingefräst werden, z. B. mit einem Scheibenfräser.

Die Strömungskanäle 37 sind zur Temperierung der Mantelfläche 07 vorzugsweise von einem flüssigen Wärmeträgermedium durchströmbar, z. B. von Wasser oder einem Öl. Es ist vorteilhaft, die Strömungskanäle 37 zumindest teilweise, d. h. an Kontaktstellen mit dem Grundkörper 28 mit einem Kunststoff auszukleiden, insbesondere um das die Strömungskanäle 37 durchströmende Wärmeträgermedium gegenüber dem Grundkörper 28 thermisch zu isolieren. Dadurch, dass die Strömungskanäle 37 in dieser Ausgestaltung des Rotationskörpers 01 sehr nahe an dessen Mantelfläche 07 anordenbar sind, kann eine sehr effiziente Temperierung verwirklicht werden, insbesondere wenn zudem die Abdeckung 36 dünnwandig, d. h. nur wenige Millimeter, vorzugsweise höchstens 10 mm stark ausgebildet ist. Wie die Fig. 5 zeigt, können in einem Ballen 02 bzw. dessen Grundkörper 28 sowohl mindestens ein Spannkanal 06 als auch mindestens ein Strömungskanal 37 oder mehrere Strömungskanäle 37 ausgebildet sein, die sich vorzugsweise parallel zueinander und in Richtung der Länge des Ballens 02 bzw. dessen Grundkörper 28 erstrecken. Im Fall mehrerer Strömungskanäle 37 ist zwischen benachbarten Strömungskanälen 37 vorzugsweise jeweils eine Schweißzone 32 ausgebildet. Auch zwischen einem Spannkanal 06 und einem benachbarten Strömungskanal 37 ist vorzugsweise eine Schweißzone 32 ausgebildet. Es ist vorteilhaft, die Schweißzonen 32 entlang des Umfangs des Ballens 02 äquidistant anzuordnen. Durch die Anwendung von Schweißverfahren mit sehr eng begrenzten Erwärmungszonen sind die Kanäle 06; 37 eng beabstandet am Umfang des Ballens 02 anordenbar. Schweißverfahren mit sehr eng begrenzten Erwärmungszonen haben den Vorteil, dass trotz dieser Wärme zuführenden Fertigungsverfahren der Rotationskörper 01 praktisch verzugsfrei bleibt. Selbst in den Strömungskanälen 37 angebrachte Auskleidungen aus Kunststoff werden durch die Wärmezufuhr bei den vorgeschlagenen bevorzugten Schweißverfahren nicht verformt.

Die Abdeckung 36 ist vorzugsweise als ein rohrförmiger Hohlzylinder ausgebildet und kann für seine Montage auf den Grundkörper 28 aufgeschoben werden. Die Abdeckung 36 kann aber auch schalenförmig, insbesondere mehrteilig ausgebildet sein, wobei mehrere bogenförmige Segmente in Richtung des Umfangs auf der Oberfläche 29 des Grundkörpers 28 aufgebracht werden. Durch die Aufbringung der Abdeckung 36, die vorzugsweise aus einem korrosionsfesten und vorteilhafterweise auch aus einem verschleißfesten Werkstoff besteht, kann für den Grundkörper 28 des Rotationskörpers 01, der z. B. aus einem preiswerteren unlegierten und nicht korrosionsfesten Werkstoff besteht, auf eine fertigungstechnisch günstige Weise eine edle Mantelfläche 07 erzeugt werden.

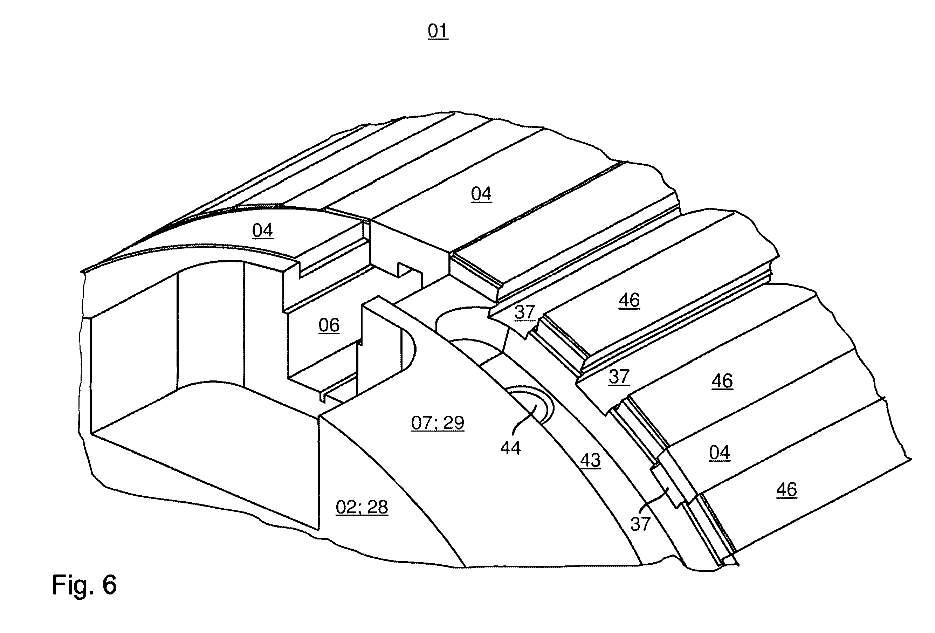

Die Fig. 6 zeigt einen Teil des Rotationskörpers 01 in einer perspektivischen Ansicht. Axial zur Länge des Rotationskörpers 01 sind an der Oberfläche 07; 29 von dessen Ballen 02 bzw. Grundkörper 28 mindestens ein Spannkanal 06 sowie mehrere vorzugsweise äquidistant beabstandete Strömungskanäle 37 als z. B. rechteckförmige Nuten ausgebildet, wobei der Spannkanal 06 und die Strömungskanäle 37 an der Oberfläche 07; 29 des Ballens 02 bzw. Grundkörpers 28 jeweils von einem vorzugsweise leistenförmig ausgebildeten Profilkörper 04 abgedeckt sind (in der Fig. 6 sind der Übersichtlichkeit halber nur ein Teil der Strömungskanäle 37 abgedeckt). Der Profilkörper 04, dessen Bautiefe geringer als die sich im Wesentlichen radial in den Ballen 02 bzw. Grundkörper 28 erstreckende Tiefe der jeweiligen Nuten ausgebildet ist, ist vorzugsweise formschlüssig jeweils in eine der Nuten eingesetzt und stoffschlüssig, insbesondere durch Anwendung des Elektronenschweißverfahrens, mit dem Ballen 02 bzw. Grundkörper 28 verbunden. Die als Strömungskanäle 37 ausgebildeten Nuten werden im Betriebszustand des Rotationskörpers 01 von einem Wärmeträgermedium durchströmt und sind vom Profilkörper 04 zur Oberfläche 07; 29 des Ballens 02 bzw. Grundkörpers 28 hermetisch verschlossen, wohingegen der Spannkanal 06 mit einer Haltevorrichtung, wie beispielhaft in der Fig. 1 dargestellt, bestückt und zur Oberfläche 07; 29 des Ballens 02 bzw. Grundkörpers 28 zumindest zum Teil mit einer z. B. durch Fräsen ausgebildeten, schlitzförmigen Öffnung 11 (nicht dargestellt) versehen wird. Zumindest einige Strömungskanäle 37 sind z. B. durch eine am Umfang des Ballens 02 bzw. Grundkörpers 28 ausgebildete Nut 43 vorzugsweise nahe einer Stirnseite des Rotationskörpers 01 miteinander verbunden, wobei diese Nut 43 ebenfalls vorzugsweise durch einen Profilkörper 04 zur Oberfläche 07; 29 des Ballens 02 bzw. Grundkörpers 28 hermetisch abgeschlossen wird, wobei dieser Profilkörper 04 jedoch vorzugsweise zylinderringförmig oder schalenförmig bzw. ringsegmentförmig ausgebildet ist. In diese am Umfang des Ballens 02 bzw. Grundkörpers 28 ausgebildete Nut 43 können eine oder mehrere Radialbohrungen 44 als Zulauf oder Ablauf für das Wärmeträgermedium münden.

Nach dem Einsetzen und Befestigen der Profilkörper 04 in die jeweiligen Nuten wird die Oberfläche 07; 29 des Ballens 02 bzw. Grundkörpers 28 vorzugsweise überdreht und/oder geschliffen und anschließend gegen Korrosion geschützt. Auch kann die Verschleißfestigkeit der Oberfläche 07; 29 des Ballens 02 bzw. Grundkörpers 28 z. B. durch Aufbringen einer Schutzschicht (wie bereits zur Fig. 3 beschrieben) verbessert werden. Bei einem geschichtet aufgebauten Ballen 02 können die Korrosionsbeständigkeit und die Verschleißfestigkeit der Oberfläche 29 des Grundkörpers 28 vorzugsweise dadurch verbessert werden, dass eine die Mantelfläche 07 des Rotationskörpers 01 bildende, z. B. rohrförmige Abdeckung 36 aus einem vorzugsweise korrosionsbeständigen und verschleißfesten Werkstoff auf die Oberfläche 29 des Grundkörpers 28 z. B. aufgeschoben und dort z. B. an zwischen benachbarten Strömungskanälen 37 ausgebildeten Stegen 46 vorzugsweise durch Elektronenstrahlschweißen angeschweißt wird, wodurch auch die in die Oberfläche 29 des Grundkörpers 28 eingefügten Profilkörper 04 abgedeckt werden. Sofern zumindest der den Spannkanal 06 abdeckende Profilkörper 04 aus einem korrosionsbeständigen Werkstoff besteht, kommt ein auf der Mantelfläche 07 des Rotationskörpers 01 angeordneter Aufzug 03 ausschließlich nur mit korrosionsfesten Flächen in Kontakt.

### Bezugszeichenliste

- 01: Rotationskörper, Zylinder, Walze, Formzylinder, Übertragungszylinder
- 02: Ballen
- 03: Aufzug, Druckform, Gummidrucktuch
- 04: Profilkörper
- 05: -
- 06: Spannkanal
- 07: Mantelfläche, Oberfläche
- 08: Schenkel
- 09: Schenkel
- 10: -
- 11: Öffnung
- 12: Wandung
- 13: Wandung
- 14: Boden
- 15: -
- 16: vorlaufendes Ende
- 17: nachlaufendes Ende
- 18: vordere Kante
- 19: hintere Kante
- 20: -
- 21: Nut
- 22: Haltemittel, Leiste; Hebel
- 23: erstes Ende
- 24: zweites Ende
- 25: -
- 26: Feder
- 27: Stellmittel, Schlauch
- 28: Grundkörper
- 29: Oberfläche (28)
- 30: -
- 31: Nut
- 32: Schweißzone
- 33: Schutzschicht (02)
- 34: Stirnseite (04)
- 35: -
- 36: Abdeckung
- 37: Strömungskanal, Kühlkanal
- 40: -
- 43: Nut
- 44: Radialbohrung
- 45: -
- 46: Steg

- a: Überstand (04)
- B: Breite (21)
- D: Dicke (22)
- P: Produktionsrichtung (01)
- S: Schlitzweite (11)
- t: Tiefe (06)
- T: Tangente
- U: Umfang
- W31: Weite (31)

- α: Öffnungswinkel
- β: Öffnungswinkel

## Patentansprüche

1. Rotationskörper (01) einer Druckmaschine mit einem Ballen (02) mit einem Profilkörper (04), wobei der Profilkörper (04) in einer an einer Mantelfläche (07) des Ballens (02) ausgebildeten Nut (31) eingesetzt und an in Richtung des Umfangs des Ballens (02) voneinander beabstandeten Fügeflächen mit dem Ballen (02) verschweißt ist, wobei der Profilkörper (04) die Nut (31) an der Mantelfläche (07) zumindest teilweise abdeckt, **dadurch gekennzeichnet, dass** eine Bautiefe des Profilkörpers (04) geringer als eine sich im Wesentlichen radial in den Ballen (02) erstreckende Tiefe der Nut (31) ausgebildet ist, wobei die Nut (31) im Ballen (02) einen Spannkanal (06) oder einen Strömungskanal (37) ausbildet, wobei der Profilkörper (04) den Spannkanal (06) oder den Strömungskanal (37) abdeckt.

2. Rotationskörper (01) nach Anspruch 1, **dadurch gekennzeichnet, dass** die Nut (31) als ein von einem Wärmeträgermedium durchströmter Strömungskanal (37) ausgebildet ist und dass der Profilkörper (04) die Nut (31) zur Mantelfläche (07) verschließt.

3. Rotationskörper (01) nach Anspruch 1, **dadurch gekennzeichnet, dass** in der Nut (31) mindestens ein Haltemittel (22) zum Halten eines Aufzugs (03) auf der Mantelfläche (07) des Ballens (02) angeordnet ist und der die Nut (31) abdeckende Profilkörper (04) eine die Nut (31) zur Mantelfläche (07) teilweise öffnende schlitzförmige Öffnung (11) aufweist.

4. Rotationskörper (01) nach Anspruch 1, **dadurch gekennzeichnet, dass** sich die Nut (31) in axialer Richtung des Rotationskörpers (01) erstreckt.

5. Rotationskörper (01) nach Anspruch 1, **dadurch gekennzeichnet, dass** sich die Nut (31) zumindest teilweise in Umfangsrichtung des Rotationskörpers (01) erstreckt.

6. Rotationskörper (01) nach Anspruch 5, **dadurch gekennzeichnet, dass** die sich in Umfangsrichtung des Rotationskörpers (01) erstreckende Nut (31) als ein mehrere in axialer Richtung des Rotationskörpers (01) verlaufende Strömungskanäle (37) miteinander verbindender Strömungskanal (37) ausgebildet ist.

7. Rotationskörper (01) nach Anspruch 1, **dadurch gekennzeichnet, dass** der Profilkörper (04) als ein Formteil ausgebildet ist.

8. Rotationskörper (01) nach Anspruch 1, **dadurch gekennzeichnet, dass** der Profilkörper (04) in axialer Richtung des Rotationskörpers (01) leistenförmig ausgebildet ist.

9. Rotationskörper (01) nach Anspruch 1, **dadurch gekennzeichnet, dass** in axialer Richtung des Rotationskörpers (01) mehrere Profilkörper (04) vorgesehen sind.

10. Rotationskörper (01) nach Anspruch 1, **dadurch gekennzeichnet, dass** der Profilkörper (04) aus einem korrosionsbeständigen Werkstoff besteht.

11. Rotationskörper (01) nach Anspruch 10, **dadurch gekennzeichnet, dass** der Profilkörper (04) aus einem Edelstahl besteht.

12. Rotationskörper (01) nach Anspruch 1, **dadurch gekennzeichnet, dass** zumindest ein der Mantelfläche (07) naher Teil zumindest einer der Fügeflächen zwischen dem Ballen (02) und dem Profilkörper (04) glattwandig und in einem Schnitt quer zur axialen Richtung des Rotationskörpers (01) ungekrümmt ausgebildet ist.

13. Rotationskörper (01) nach Anspruch 1, **dadurch gekennzeichnet, dass** die Nut (31) einen Spannkanal (06) mit einem runden oder einem rechteckigen Querschnitt ausbildet.

14. Rotationskörper (01) nach Anspruch 1, **dadurch gekennzeichnet, dass** der Ballen (02) eine die Mantelfläche (07) des Rotationskörpers (01) bildende, die Oberfläche (29) eines Grundkörpers (28) abdeckende Abdeckung (36) aufweist, wobei die einen Spannkanal (06) oder einen Strömungskanal (37) bildenden Nuten im Grundkörper (28) ausgebildet und an der Oberfläche (29) des Grundkörpers (28) jeweils von einem in der jeweiligen Nut angeordneten Profilkörper (04) zumindest teilweise abgedeckt sind.

15. Rotationskörper (01) nach Anspruch 1, **dadurch gekennzeichnet, dass** der Profilkörper (04) mittels Elektronenstrahlschweißen verschweißt ist.

16. Rotationskörper (01) nach Anspruch 1, **dadurch gekennzeichnet, dass** der Ballen (02) aus einem für Korrosion anfälligen Werkstoff besteht.

17. Rotationskörper (01) nach Anspruch 1, **dadurch gekennzeichnet, dass** die Mantelfläche (07) des Ballens (02) mit einer korrosionsfesten Schutzschicht (33) überzogen ist.

18. Rotationskörper (01) nach Anspruch 17, **dadurch gekennzeichnet, dass** die Schutzschicht (33) ganz oder zumindest teilweise eine zur Mantelfläche (07) gerichtete Stirnseite (34) des Profilkörpers (04) abdeckt.

## Claims

1. Rotating element (01) of a printing press, comprising a body (02) having a profiled element (04), the profiled element (04) being inserted into a groove (31) formed on a lateral surface (07) of the body (02) and being welded to the body (02) at joining surfaces a distance apart in the direction of the circumference of the body (02), the profiled element (04) at least partly covering the groove (31) on the lateral surface (07), **characterized in that** an installation depth of the profiled element (04) is smaller than a depth of the groove (31) which extends substantially radially into the body (02), the groove (31) forming a clamping channel (06) or a flow channel (37) in the body (02), the profiled element (04) covering the clamping channel (06) or the flow channel (37).

2. Rotating element (01) according to Claim 1, **characterized in that** the groove (31) is in the form of a flow channel (37) through which a heat-transfer medium flows, and **in that** the profiled element (04) closes the groove (31) relative to the lateral surface (07).

3. Rotating element (01) according to Claim 1, **characterized in that** at least one retaining means (22) for holding a packing (03) on the lateral surface (07) of the body (02) is arranged in the groove (31), and the profiled element (04) covering the groove (31) has a slot-like opening (11) partly opening the groove (31) to the lateral surface (07).

4. Rotating element (01) according to Claim 1, **characterized in that** the groove (31) extends in the axial direction of the rotating element (01).

5. Rotating element (01) according to Claim 1, **characterized in that** the groove (31) extends at least partly in the circumferential direction of the rotating element (01).

6. Rotating element (01) according to Claim 5, **characterized in that** the groove (31) extending in the circumferential direction of the rotating element (01) is in the form of a flow channel (37) connecting to one another a plurality of flow channels (37) running in the axial direction of the rotating element (01).

7. Rotating element (01) according to Claim 1, **characterized in that** the profiled element (04) is in the form of a shaped part.

8. Rotating element (01) according to Claim 1, **characterized in that** the profiled element (04) is formed so as to be strip-like in the axial direction of the rotating element (01).

9. Rotating element (01) according to Claim 1, **characterized in that** a plurality of profiled elements (04) are provided in the axial direction of the rotating element (01).

10. Rotating element (01) according to Claim 1, **characterized in that** the profiled element (04) consists of a corrosion-resistant material.

11. Rotating element (01) according to Claim 10, **characterized in that** the profiled element (04) consists of a stainless steel.

12. Rotating element (01) according to Claim 1, **characterized in that** at least one part of at least one of the joining surfaces between the body (02) and the profiled element (04), which part is close to the lateral surface (07), is formed so as to have a smooth wall and not to be curved in a section transverse to the axial direction of the rotating element (01).

13. Rotating element (01) according to Claim 1, **characterized in that** the groove (31) forms a clamping channel (06) having a round or a rectangular cross-section.

14. Rotating element (01) according to Claim 1, **characterized in that** the body (02) has a cover (36) forming the lateral surface (07) of the rotating element (01) and covering the surface (29) of a base element (28), the grooves forming a clamping channel (06) or a flow channel (37) being formed in the base body (28) and being at least partly covered on the surface (29) of the base body (28) in each case by a profiled element (04) arranged in the respective groove.

15. Rotating element (01) according to Claim 1, **characterized in that** the profiled element (04) is welded by means of electron beam welding.

16. Rotating element (01) according to Claim 1, **characterized in that** the body (02) consists of a material susceptible to corrosion.

17. Rotating element (01) according to Claim 1, **characterized in that** the lateral surface (07) of the body (02) is covered with a corrosion-resistant protective layer (33).

18. Rotating element (01) according to Claim 17, **characterized in that** the protective layer (33) completely or at least partly covers an end face (34) of the profiled element (04), which end face is directed towards the lateral surface (07).

## Revendications

1. Corps rotatif (01) d'une machine à imprimer, avec une table (02) munie d'un corps profilé (04), le corps profilé (04) étant inséré dans une rainure (31) réalisée sur une surface d'enveloppe (07) de la table (02) et étant soudé à la table (02), sur des surfaces de joint espacées les unes des autres dans la direction de la périphérie de la table (02), le corps profilé (04) couvrant au moins partiellement la rainure (31) sur la surface d'enveloppe (07), **caractérisé en ce qu'**une profondeur de construction du corps profilé (04) est inférieure à une profondeur, s'étendant sensiblement radialement dans la table (02), de la rainure (31), la rainure (31) constituant, dans la table (02), un canal de mise sous tension mécanique (06) ou un canal d'écoulement (37), le corps profilé (04) couvrant le canal de mise sous tension mécanique (06) ou le canal d'écoulement (37).

2. Corps rotatif (01) selon la revendication 1, **caractérisé en ce que** la rainure (31) est réalisée sous forme d'un canal d'écoulement (37) traversé par un écoulement de fluide caloporteur, et **en ce que** le corps profilé (04) ferme la rainure (31) vers la surface d'enveloppe (07).

3. Corps rotatif (01) selon la revendication 1, **caractérisé en ce qu'**au moins un canal de maintien (22) est disposé dans la rainure (31), pour maintenir un habillage (03) sur la surface d'enveloppe (07) de la table (02), et le corps profilé (04) couvrant la rainure (31) présente une ouverture (11) en forme de fente, ouvrant partiellement la rainure (31) vers la surface d'enveloppe (07).

4. Corps rotatif (01) selon la revendication 1, **caractérisé en ce que** la rainure (31) s'étend dans la direction axiale du corps rotatif (01).

5. Corps rotatif (01) selon la revendication 1, **caractérisé en ce que** la rainure (31) s'étend au moins partiellement dans la direction périphérique du corps rotatif (01).

6. Corps rotatif (01) selon la revendication 5, **caractérisé en ce que** la rainure (31), s'étendant dans la direction périphérique du corps rotatif (01), est réalisée sous forme de canal d'écoulement (37), reliant ensemble plusieurs canaux d'écoulement (37) s'étendant dans la direction axiale du corps rotatif (01).

7. Corps rotatif (01) selon la revendication 1, **caractérisé en ce que** le corps profilé (04) est réalisé sous forme de pièce moulée.

8. Corps rotatif (01) selon la revendication 1, **caractérisé en ce que** le corps profilé (04) est réalisé sous forme de bande, dans la direction axiale du corps rotatif (01).

9. Corps rotatif (01) selon la revendication 1, **caractérisé en ce que** plusieurs corps profilé (04) sont prévus dans la direction axiale du corps rotatif (01).

10. Corps rotatif (01) selon la revendication 1, **caractérisé en ce que** le corps profilé (04) est composé d'un matériau résistant à la corrosion.

11. Corps rotatif (01) selon la revendication 10, **caractérisé en ce que** le corps profilé (04) est composé d'un acier inoxydable.

12. Corps rotatif (01) selon la revendication 1, **caractérisé en ce qu'**au moins une partie, proche de la surface d'enveloppe (07), d'au moins l'une des surfaces de joint entre la table (02) et le corps profilé (04) est réalisé avec une paroi lisse et ne présentant pas d'incurvation en observant en une vue en coupe, transversalement à la direction axiale du corps rotatif (01).

13. Corps rotatif (01) selon la revendication 1, **caractérisé en ce que** la rainure (31) constitue un canal de mise sous tension mécanique (06) à section transversale ronde ou rectangulaire.

14. Corps rotatif (01) selon la revendication 1, **caractérisé en ce que** la table (02) présente un recouvrement (36), formant la surface d'enveloppe (07) du corps rotatif (01), couvrant la surface (29) d'un corps de base (28), les rainures, formant un canal de mise sous tension mécanique (06) ou un canal d'écoulement (37), étant réalisées dans le corps de base (28) et étant couvertes au moins partiellement, sur la surface (29) du corps de base (28), chaque fois par un corps profilé (04) disposé dans la rainure respective.

15. Corps rotatif (01) selon la revendication 1, **caractérisé en ce que** le corps profilé (04) est soudé par soudage par faisceau d'électrons.

16. Corps rotatif (01) selon la revendication 1, **caractérisé en ce que** la table (02) est composée d'un matériau approprié pour la corrosion.

17. Corps rotatif (01) selon la revendication 1, **caractérisé en ce que** la surface d'enveloppe (07) de la table (02) est revêtue d'une couche protectrice (33) résistante à la corrosion.

18. Corps rotatif (01) selon la revendication 17, **caractérisé en ce que** la couche protectrice (33) couvre, totalement ou au moins partiellement, une face frontale (34), tournée vers la surface d'enveloppe (07), du corps profilé (04).
